Europäisches Patentamt

European Patent Office

Office européen des brevets

(19)

(11) Veröffentlichungsnummer: 0 035 277
A1

(12) EUROPÄISCHE PATENTANMELDUNG

(21) Anmeldenummer: 81101550.2

(22) Anmeldetag: 04.03.81

(51) Int. Cl.³: H 04 Q 9/00, H 04 L 11/16

(30) Priorität: 05.03.80 DE 3008450

(43) Veröffentlichungstag der Anmeldung: 09.09.81
Patentblatt 81/36

(84) Benannte Vertragsstaaten: FR GB IT NL

(71) Anmelder: Färber, Georg, Prof. Dr., Egerweg 3,
D-8012 Ottobrunn (DE)

(72) Erfinder: Färber, Georg, Prof. Dr., Egerweg 3,
D-8012 Ottobrunn (DE)

(74) Vertreter: Ter Meer-Müller-Steinmeister Patentanwälte,
Triftstrasse 4, D-8000 München 22 (DE)

(54) Sequentielles Übertragungssystem zum adressenlosen Anschliessen mehrerer Teilnehmer an eine Zentrale.

(57) Das sequentielle Übertragungssystem zum adressenlosen Anschliessen mehrerer Teilnehmer (z.B. Datenquellen, Verbraucher etc.) an eine Zentrale (1) über einen gemeinsamen Peripheriebus (2, 3) sieht vor, dass jedem Teilnehmer ($T_1$, $T_2$, ... $T_N$) ein steuerbares Schalterpaar ($S_1$, $S_2$) zugeordnet ist, dessen eines Schalterelement ($S_2$) in Reihe zu einer durch dieses Schalterelement auftrennbaren Leitungsader (2) des Peripheriebusses liegt, während das andere Schalterelement ($S_1$) in Reihe zum zugeordneten Teilnehmer geschaltet ist und im Schliesszustand den Anschluss des Teilnehmers an die Zentrale (1) herstellt. Jedem Schalterpaar ist eine Steuerlogik (4, 5; 7, 8, 9) zugeordnet, die sicherstellt, dass die beiden Schalterelemente ($S_1$, $S_2$) nie gleichzeitig auf Stromdurchgang geschaltet, also nie gleichzeitig geschlossen sind. Das Übertragungssystem lässt sich gut in Verbindung mit einer einfachen Zweidrahtverbindung (2, 3) verwirklichen und zur sequentiellen Erfassung und Aufbereitung von Daten aus verschiedenen Datenquellen verwenden, die nur relativ langsamen Änderungen unterliegen, beispielsweise zur automatisierten Heizkostenerfassung in Gebäuden, zur Überwachung von Umweltschutz-Messnetzen und dergleichen. Zur Erhöhung der Schaltungssicherheit kann in der Steuerlogik jedes Schalterpaars ein Zeitverzögerungsglied eingesetzt sein, das sicherstellt, dass die Durchschaltung des einzelnen Teilnehmers zur Zentrale erst auf ein von der Zentrale abgegebenes Aktivierungssignal hin erfolgt.

$T_i$: Teilnehmer i
$1 \leq i \leq N$

ACTORUM AG

BESCHREIBUNG

Die Erfindung betrifft ein Übertragungssystem zum Anschließen mehrerer Teilnehmer an eine Zentrale über eine
gemeinsame Verbindungsstrecke, die nachfolgend als
"Peripheriebus" bezeichnet wird. Die Teilnehmer können
entweder Datenquellen oder Datensenken sein; der Peripheriebus ist vorzugsweise eine Zweidrahtverbindung.

Es ist bereits bekannt, analoge Sensoren, digitale Geber
(z.B. Kontakte) sowie analoge und digitale Stellglieder
durch eine Punkt-zu-Punkt-Verbindung mit einer zentralen
Sammelstelle zu verbinden. Auch sind Sammelleitungssogenannte Bus-Systeme bekannt, bei welchen die einzelnen
Teilnehmer durch besonders eingestellte und aufzurufende
Adressen identifiziert und damit    am  Bus bzw. in der
Zentrale voneinander unterschieden werden können. Schließlich sind Frequenz-Multiplex-Verfahren bekannt, durch die
sich die einzelnen an einen Bus anschaltbaren Teilnehmer
durch jeweils eine voreingestellte bzw. voreinstellbare
Frequenz unterscheiden lassen.

Alle bekannten Lösungen bedingen einen erheblichen
Installationsaufwand, da entweder individuelle Kabel von
der Zentrale zu jedem Teilnehmer gelegt
oder schaltungstechnische und konstruktive Maßnahmen zur
individuellen Einstellung von Adressen vorgesehen werden
müssen.

Der Erfindung liegt die Aufgabe zugrunde, den aufgezeigten
Installationsaufwand zu vermeiden und insbesondere eine
technische Möglichkeit zum adressenlosen Anschließen
mehrerer Teilnehmer an einen zu einer Zentrale führenden
Peripheriebus aufzuzeigen. Unter Teilnehmer werden dabei
Sensoren wie Temperaturfühler, Rauchdetektoren und dergleichen als Datenquellen und Stellglieder, wie Ventile, Signalgeber und dergleichen als Datensenken verstanden.

Die erfindungsgemäße Lösung der gestellten Aufgabe ist in kurzer Zusammenfassung hinsichtlich der wesentlichen Merkmale im Patentanspruch 1 angegeben. Vorteilhafte Weiterbildungen und Ausgestaltungen des Erfindungsgedankens sind in der nachfolgenden Beschreibung angegeben sowie in Unteransprüchen gekennzeichnet.

Die Erfindung sieht vor, jedem Teilnehmer mindestens zwei durch eine Steuerlogik betätigbare Schalterelemente zuzuordnen, von denen das eine in Reihe zum mit der Zentrale zu verbindenden Teilnehmer und das andere unmittelbar im Verlauf der einen Ader des Busses liegt, so daß die betreffende Ader unterbrochen wird, wenn das Schalterelement öffnet. Innerhalb des Erfindungsgedankens ist es von Bedeutung, daß die Schalterelemente eines Schalterpaars bei jedem Teilnehmer nie gleichzeitig geschlossen sind. Die Reihenfolge oder Auswahl der einzelnen Teilnehmer ist durch ihre Reihung am Bus gegeben. Diese Reihung wird dadurch eindeutig, daß beispielsweise bei einer Zweidrahtleitung einer der beiden Busleiter bei jedem Teilnehmer unterbrochen wird.

Die zeitliche Steuerung für die Umschaltung von einem zum nächsten Teilnehmer kann sowohl zentral als auch dezentral durchgeführt werden. Dabei wird unter zentraler Steuerung verstanden, daß die sequentielle Anschaltung der Teilnehmer am Bus durch sequentielle Steuersignale von der Zentrale aus bestimmt wird. Unter dezentraler Steuerung wird entweder eine Aktivierung der einzelnen Steuerlogiken der Teilnehmer von außen oder eine Aktivierung des ersten Teilnehmers am Bus von außen oder von der Zentrale aus, beispielsweise durch Einschaltung der über den Bus auch möglichen Versorgungsspannung für die Teilnehmer, verstanden. Die Aktivierung der weiteren Teilnehmer erfolgt dann sequentiell etwa mit dem Schließen des im einen Busleiter liegenden Schalterelements, wobei die einzelnen Teilnehmer die zeitliche Reihenfolge und Dauer ihrer Anschaltung an den Bus durch die Verwendung von Zeitgliedern selbst bestimmen, so daß nach Ablauf der Anschaltzeit für einen ersten Teilnehmer mit dem Schließen des in der einen Ader des Peripheriebusses liegenden Schalterelements die Anschaltzeit für den nächsten Teilnehmer beginnt.

Die Erfindung und vorteilhafte Einzelheiten werden nachfolgend unter bezug auf die Zeichnung in beispielsweisen Ausführungsformen näher erläutert. Es zeigen:

Fig. 1 den prinzipiellen Aufbau eines erfindungsgemäßen Übertragungssystems in Anwendung auf einen Zweidraht-Peripheriebus;

Fig. 2 ein Beispiel für eine prinzipielle Ausführungsform eines Teilnehmers mit zugeordnetem Schalterpaar und Steuerlogik in drei verschiedenen Betriebszuständen;

Fig. 3 ein Schaltungsbeispiel für das Schalterpaar mit Steuerlogik bei zentraler Steuerung für einen Teilnehmer;

Fig. 4 ein Schaltungsbeispiel für das Schalterpaar mit Steuerlogik für einen Teilnehmer bei dezentraler Steuerung;

Fig. 5 ein Schaltungsbeispiel für die in Fig. 4 mit "Delay" bezeichneten Zeitverzögerungsglieder;

Fig. 6 das Blockschaltbild eines Ausführungsbeispiels für die Struktur der Zentrale bei zentraler Aktivierung jedoch dezentraler Weitergabe des Anschaltbefehls für die einzelnen Teilnehmer;

- 4 -

0035277

Fig. 7 den zeitlichen Verlauf der Anschaltsteuerung bei
Verwirklichung der Anschaltung der einzelnen Teilnehmer beispielsweise mit einer Steuerschaltung
gemäß Fig. 4;

Fig. 8 ein allgemeines Schaltungsschema bei Peripheriebus-Fernspeisung der einzelnen Teilnehmer;

Fig. 9 eine Vereinfachung der Teilnehmeranschaltung mit
dem allgemeinen Schaltungsschema der Fig. 8 bei
Fernspeisung der Teilnehmer über den Sensorbus;

Fig. 10 ein einfaches Beispiel für die räumlich  konstruktive Gestaltung eines Schalterpaars mit zugeordneter Steuerlogik in Anwendung auf einen Zweidraht-Peripheriebus;

Fig. 11 ein Schaltungsbeispiel für eine Interface-
Schaltungsgruppe zwischen einer als Mikroprozessor
verwirklichten zentralen Abfrage und Verarbeitungseinheit und dem Peripheriebus;

Fig. 12 ein Beispiel für ein Befehlsfolgeflußdiagramm für
den über die Interface-Einheit nach Fig.11 an den
Peripheriebus angeschlossenen Mikroprozessor und

Fig. 13 ein Anwendungsbeispiel für das erfindungsgemäße
Übertragungssystem.

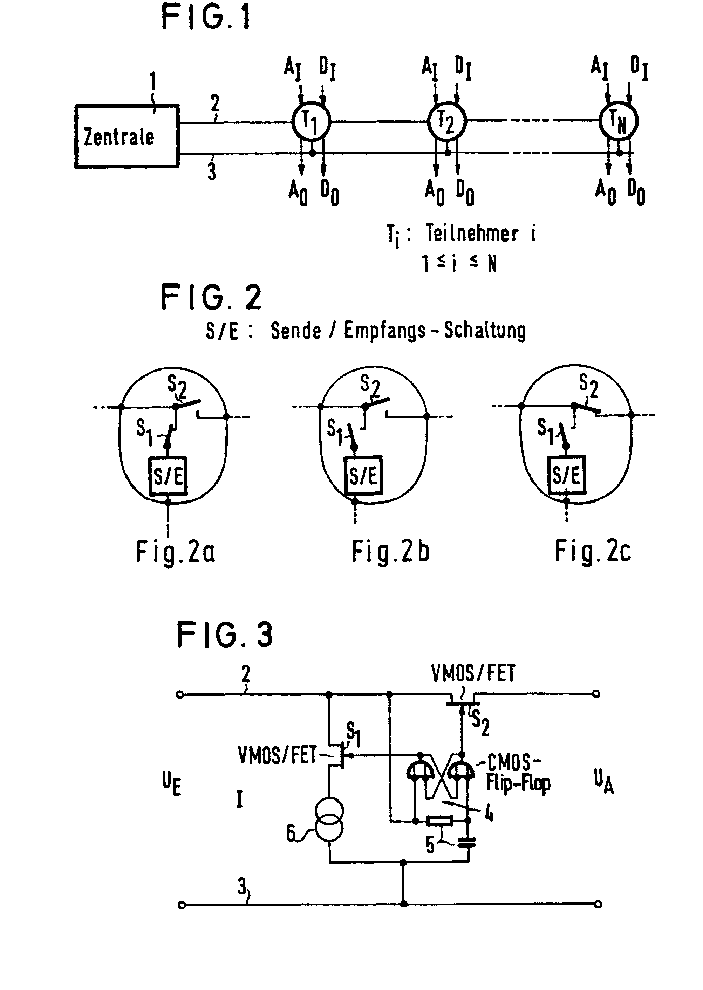

Die prinzipielle Struktur eines Übertragungssystems gemäß
der Erfindung zeigt die Fig. 1:
Ein Leitungspaar 2,3 läuft von einer Zentrale 1 zu einer
Mehrzahl von Teilnehmern, die mit $T_1$, $T_2$, ... $T_N$ bezeichnet
sind. Einer der beiden Leiter, im dargestellten Beispiel
der Leiter 2, ist bei jedem Teilnehmer aufgetrennt, was
in weiter unten noch näher erläuterter Weise die Identifizierung der einzelnen Teilnehmer durch ihre Reihenfolge
am Leitungspaar ("Bus" im folgenden) ermöglicht. An den
einzelnen Teilnehmern sind mit $A_I$ ein Analogeingang, mit
$D_I$ ein Digitaleingang, mit $A_O$ ein Analogausgang und mit
$D_O$ ein Digitalausgang bezeichnet.

Die Fig. 2 zeigt mit ihren drei Teilfiguren 2a, 2b und 2c die prinzipielle Ausführung eines Teilnehmers mit symbolisch als Kontakte dargestellten Schalterpaaren, welche technisch beispielsweise durch FET-Schalter realisiert sein können. Im Ruhezustand der Fig. 2a, das heißt wenn keine Datenübertragung zwischen der Zentrale und den einzelnen Teilnehmern erfolgt, ist der Schalter $S_1$ jedes Schalterpaars geschlossen und der Schalter $S_2$ jeweils geöffnet. Dieser Zustand besteht zunächst auch noch bei der weiter unten näher beschriebenen Aktivierung von der Zentrale aus.

Fig. 2b zeigt den aufgetrennten Zustand, bei dem beide Schalter $S_1$, $S_2$ während eines sehr kurzen Zeitraums geöffnet sind.

Unmittelbar im Anschluß an diesen sehr kurzen Zeitraum schließt der Schalter $S_2$ und der Schalter $S_1$ öffnet, so daß der Weg zum nächsten Teilnehmer freigegeben und die Anschaltung des zuvor angeschalteten Teilnehmers unterbrochen wird.

Das Schaltungsbeispiel der Fig. 3 für das einem Teilnehmer zugeordnete Schalterpaar mit Steuerlogik bei zentraler Steuerung zeigt die als VMOS-FETen verwirklichten Schalter $S_1$, $S_2$ des Schalterpaars, die als CMOS-Flip-Flop verwirklichte Steuerlogik 4 mit RC-Glied 5, welches die astabile Standzeit des CMOS-Flip-Flops 4 bestimmt, sowie den allgemein als Stromquelle dargestellten Teilnehmer 6.

Die durch die astabile Standzeit des Flip-Flops 4 bestimmte Anschaltung des Teilnehmers 6 an den Bus 2, 3 geschieht wie folgt:

Beim Anlegen einer Eingangsspannung $U_E$, was beispielsweise durch das Einschalten der Versorgungsspannung an der Zentrale erfolgen kann, wird das Flip-Flop 4 so ein-gestellt (bzw. bleibt in seinem Ruhezustand) derart, daß der Teilnehmer 6 im Stromkreis liegt, das heißt das Schalterelement $S_1$ wird geschlossen , also auf Stromdurchgang geschaltet. Durch einen kurzen Impuls, beispielsweise durch kurzzeitige Unterbrechung von $U_E$ wird das Flip-Flop 4 unter der Wirkung des RC-Glieds umgesetzt, wodurch jetzt das Schalterelement $S_1$ geöffnet und das Schalterelement $S_2$ geschlossen wird. Damit wird $U_E$ zum Ausgang durchgeschaltet ($U_A$). Der Teilnehmer 6 ist damit vom Bus 2, 3 getrennt, jedoch bleibt die Versorgung des Flip-Flops 4 gesichert. Der dabei über die teilnehmerbezogene Logik fließende Reststrom ist vernachlässigbar klein, insbesondere wenn - wie angegeben - das Flip-Flop 4 in CMOS-Technik verwirklicht ist.

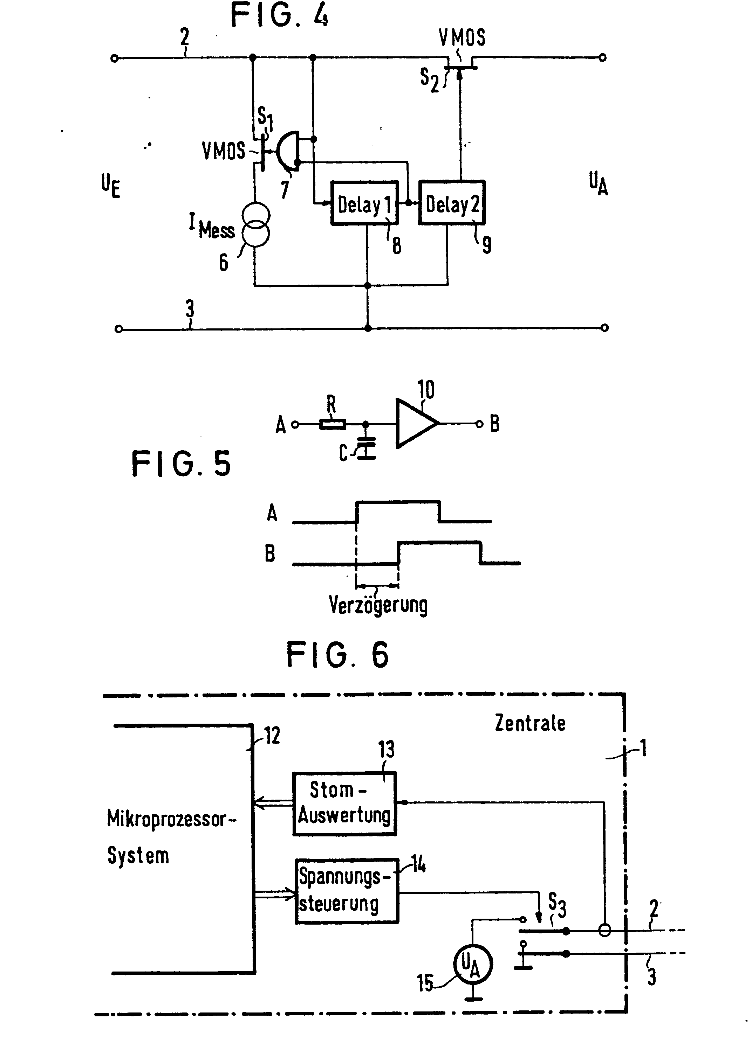

Das Schaltungsbeispiel der Fig. 4 zeigt eine gegenüber der Fig. 3 abgewandelte Lösungsmöglichkeit für die Steuerlogik bei dezentraler Steuerung der sequentiellen Anschaltung der Teilnehmer an den Bus 2, 3. Die Steuerlogik ist in diesem Fall durch zwei Verzögerungselemente 8, 9 verwirklicht und arbeitet wie folgt: Mit dem Anlegen der Eingangsspannung $U_E$ (beispielsweise der Versorgungsspannung an der Zentrale, wenn es sich um den ersten Teilnehmer am Bus handelt) wird der wiederum als Stromquelle dargestellte Teilnehmer 6 durch Schließen des Schalterelements $S_1$ über ein NOR- bzw. NAND-Glied 7 in den Sensorbus-Stromkreis eingeschaltet. Nach Ablauf der ersten Verzögerungszeit des Verzögerungsglieds 8 wird das wiederum beispielsweise als VMOS-Schalter verwirklichte Schalterelement $S_1$ ausgeschaltet und es beginnt jetzt eine kurze durch die Verzögerungszeit des Verzögerungselements 9 bestimmte Zeitlücke, in der beide Schalterelemente $S_1$ und $S_2$ geöffnet sind. Nach Ablauf der Verzögerungszeit des Verzögerungsglieds 9 schaltet das ebenfalls als VMOS-Transistor verwirklichte Schalterelement $S_2$ zum Ausgang durch ($U_A = U_E$).

Es sei betont, daß anstelle der Verzögerungselemente 8 und 9 auch Zeitzähler zur Bestimmung der Verzögerungszeit verwendet werden können. In diesem Fall kann je nach den anwendungstechnischen Gegebenheiten eine individuelle Einstellung der Verzögerungszeit unter Umständen vereinfacht werden.

Die Fig. 5 zeigt ein Schaltungsbeispiel für die Verwirklichung der Verzögerungselemente 8, 9 bei der Schaltung nach Fig. 4: Einem aktiven Baustein 10, beispielsweise einem Schmitt-Trigger oder einem Operationsverstärker kann ein RC-Glied vorgeschaltet sein, dessen Bemessung die Verzögerung zwischen einem Eingangssignal A und einem Ausgangssignal B bestimmt.

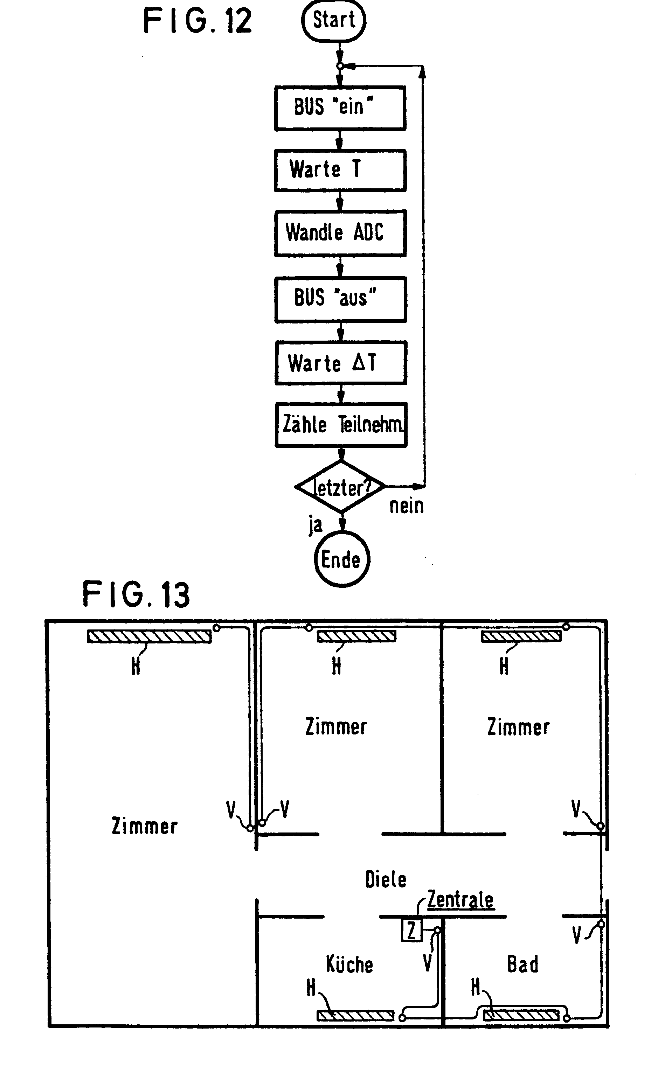

Die Fig. 6 verdeutlicht eine prinzipielle Möglichkeit für den Aufbau und die Organisation der Zentrale 1: Ein Mikroprozessorsystem löst in weiter unten anhand der Fig. 11 noch näher erläuterter Weise zu Beginn eines Meßprogrammablaufs eine Spannungssteuerung 14 aus, durch welche ein Schalter $S_3$ aktiviert wird, so daß zwischen den beiden Leitungen 2, 3 des Bus' eine Spannung $U_A$ von einer Versorgungsquelle 15 aus angelegt wird. Übertragungen zu den einzelnen Teilnehmern können durch Modulation der Ausgangsspannung ausgelöst werden, während Information von den Teilnehmern zur Zentrale durch die Erfassung des über das Leitungspaar fließenden Stroms ausgetauscht werden kann.

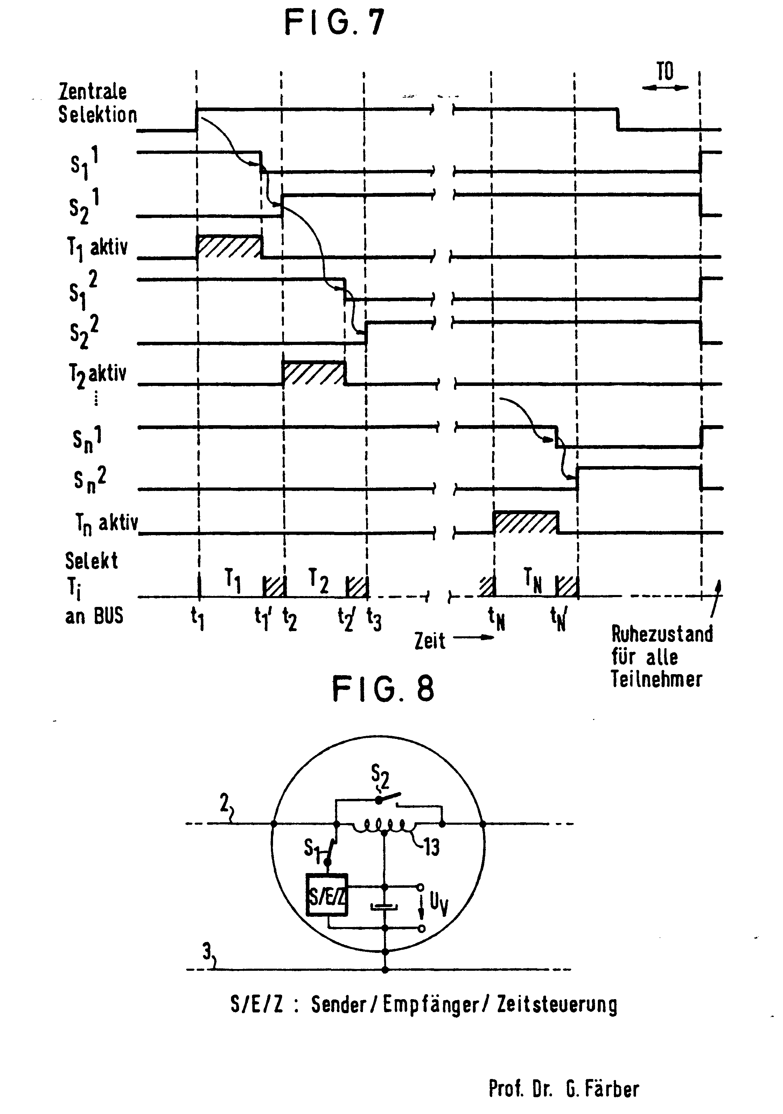

Die Fig. 7 dient zur beispielsweisen Erläuterung des Verlaufs von Steuersignalen zur sequentiellen Anschaltung der Teilnehmer an den Bus gemäß der Erfindung:

Für jeden Teilnehmer $T_1$, $T_2$, ... $T_N$ (vgl. Fig. 1) steht

- 8 -                    0035277

ein individueller Zeitraum für die Signalübertragung zur
Verfügung. In Übereinstimmung mit der Erfindung tritt
an die Stelle der Adressierung der einzelnen Teilnehmer
die Reihenfolge am Bus 1, 2. Für die zeitliche Steuerung
und Anschaltung der einzelnen Teilnehmer stehen - wie
bereits oben angesprochen - folgende Alternativen zur
Verfügung:

a) Zentrale Steuerung: Hier bestimmt die Zentrale, wie
   lange ein Teilnehmer den Bus belegen kann. Anhand
   der Figuren 11 und 12 wird weiter unten noch ein
   Beispiel dafür erläutert, wie die individuelle Belegungszeit festgelegt wird. Durch Übertragung eines
   Befehlssignals (z.B. durch kurze Unterbrechung des
   übertragenen Signals) gelangt der gerade ausgewählte
   Teilnehmer vom Ausgangszustand gemäß Fig. 2a über den
   Zustand der Fig. 2b sofort in den Zustand gemäß
   Fig. 2c, womit die Überwachung bzw. der Informationsaustausch an den nächsten Teilnehmer übergeht. Der
   sequentielle Auswahlvorgang beginnt damit, daß die
   Zentrale das Auslösesignal an den ersten Teilnehmer überträgt und endet mit dem letzten Teilnehmer
   am Bus.

b) Dezentrale Steuerung: Wie oben anhand der Fig. 4 erläutert,bestimmt hier jeder Teilnehmer aufgrund
   seines teilnehmer-internen Zeitglieds, wie lange er
   die Kontrolle über den Bus behält.

Für beide Alternativen gilt, daß die Selektion der Teilnehmer nicht beliebig ist, sondern in Reihenfolge ihrer
Anordnung am Bus erfolgt.

Für die Übertragung zwischen der Zentrale und dem jeweils
ausgewählten Teilnehmer können folgende Informationsdarstellungen ausgetauscht werden:

- Analogsignale: Die zu übertragende Information wird in einem analogen Strom (z.B. 4 bis 20mA) abgebildet. Durch die übrigen am Bus liegenden Teilnehmer kann es zu geringfügigen Signalverfälschungen kommen, welche jedoch bei Wahl der oben erwähnten leistungsarmen C-MOS-Technik minimal werden.

- Digital-Signalübertragung: Zwei unterschiedliche Spannungspegel werden in zeitrichtiger Folge beispielsweise als Abbildung eines Analogsignals übertragen.

- Digital-codierte Analogsignale: Hierzu gehören die Verfahren der Pulsfrequenz-Modulation, der Pulszahl-Darstellung oder der Delta-Modulation. Die Information liegt hier im zeitlichen Muster, in welchem zwischen zwei Signalpegeln hin- und hergeschaltet wird. Diese Verfahren haben den Vorteil einer geringen Störanfälligkeit.

- Serielle digitale Codierung: Hier werden durch Codesicherung geschützte Digitalcodes übertragen, wobei die Taktinformation durch bekannte selbsttaktende Übertragungsverfahren übermittelt wird.

Es besteht also die Möglichkeit, alle gebräuchlichen Übertragungsverfahren auch für die Übertragung mit dem jeweils ausgewählten Teilnehmer einzusetzen.

Das Schaubild der Fig. 7 zeigt den zeitlichen Signalverlauf am Peripheriebus bei dezentraler Steuerung, wobei jeder Teilnehmer eine Steuerlogik enthalten kann, die in ihrem prinzipiellen Aufbau jener der Fig. 4 entspricht. Die Zentrale bestimmt beispielsweise durch Einschaltung der Versorgungsspannung zum Zeitpunkt $t_1$ die Abfrage des ersten Teilnehmers, dessen Schalterelement $S_1^1$ geschlossen und dessen Schalter $S_2^1$ geöffnet ist (vgl. Fig. 2a in Verbindung mit Fig. 4). Zum Zeitpunkt $t_1'$ ist die Verzögerungszeit des ersten Verzögerungselements 8 abgelaufen, so daß der Schalter $S_1^1$ öffnet und der Schalter $S_2^1$ noch geöffnet bleibt. Zum Zeitpunkt $t_2$ ist die Verzögerungszeit des Verzögerungselements 9 abgelaufen. Jetzt bleibt das Schalterelement $S_1^1$ geöffnet und das Schalterelement $S_2^1$ schließt, so daß die Aktivierung des zweiten Teilnehmers am Bus erfolgt, während die Abfrage des ersten Teilnehmers bereits abgeschlossen ist. Die Abfrage der übrigen Teilnehmer am Bus erfolgt in analoger Weise, was aus dem Zeitschaubild der Fig. 7 ohne weitere Erläuterungen ersichtlich ist. Zum Zeitpunkt $t_N'$ öffnet der Schalter $S_1^N$ des Teilnehmers $T_N$, womit die Abfrage des letzten Teilnehmers am Bus erfolgt ist. Nach diesem Zeitpunkt schaltet die Zentrale die Versorgungsspannung wieder ab, so daß der Ruhe- oder Ausgangszustand für alle Teilnehmer wieder erreicht ist.

Die Stromversorgung der Teilnehmer kann selbstverständlich durch eine eigene Versorgungseinrichtung erfolgen. Beim Beispiel der Fig. 7 erfolgte die Stromversorgung jedoch über die Signalleitung. In diesem Fall muß an jedem Teilnehmer eine Trennung zwischen der Versorgungsspannung und der Signalübertragung erfolgen. Das allgemeine Schema hierzu läßt sich aus Fig. 8 ersehen:
Durch einen Tiefpaß 13, beispielsweise eine Drossel, kann zwar die Versorgungsspannung, nicht jedoch ein hochfrequentes Signal passieren. Erst mit dem Schließen des Schalterelements $S_2$ ist der Weg auch für die informationsübertragenden Signale freigegeben. Eine direkte Analogsignalübertragung ist in diesem Fall allerdings nicht möglich.

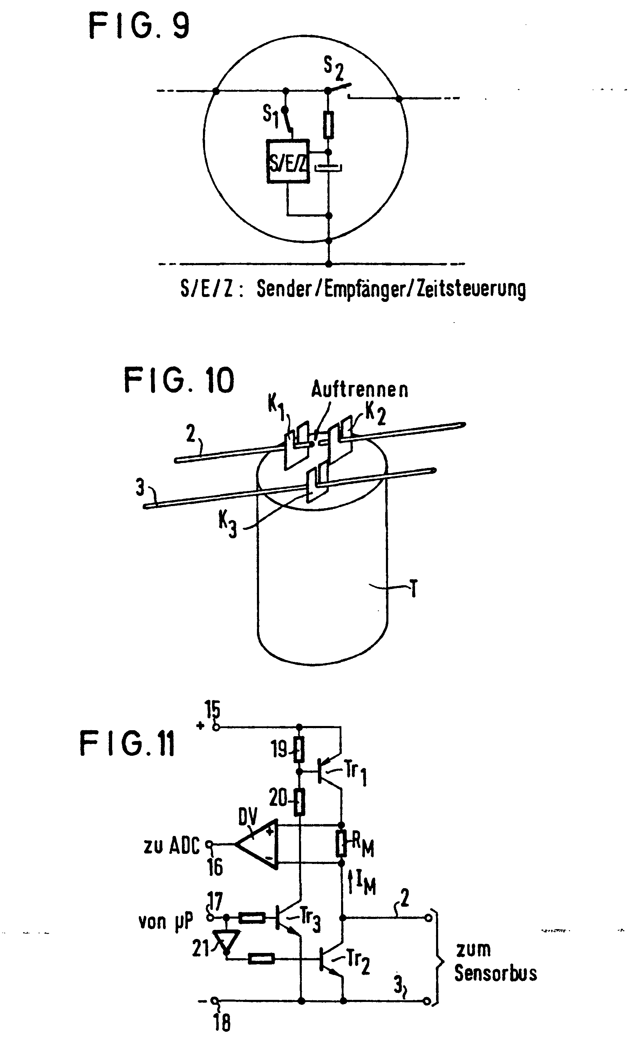

Die Fig. 9 zeigt einen besonders einfachen Spezialfall für einen Peripheriebus, der Information nur vom Teilnehmer zur Zentrale zu übertragen hat. Hier kann der Tiefpaß 13 von Fig. 8 entfallen. Die Anschaltung der Versorgungsspannung dient gleichzeitig als Signal für den Start der kettenförmig ablaufenden Abfrage der einzelnen Teilnehmer. Es muß nur sichergestellt sein, daß die Stromversorgung auch während eines Eingabevorgangs möglich ist. Ein Beispiel für diese Ausführungsform der Erfindung ist der sogenannte Sensorbus, der eine Reihe von räumlich verteilt angeordneten Sensoren, z.B. Temperaturmeßfühler mit einer Zentrale verbindet.

Fig. 9 gibt einen solchen einfachen Teilnehmer wieder, wobei die dargestellte von der Signalleitung gespeiste Steuerschaltung wiederum die anhand der Fig. 2 angegebenen Schaltaufgaben durchführt. Bei zentraler Steuerung wird die Steuerlogik beispielsweise als Flip-Flop (vgl. Fig. 3) und bei dezentraler Steuerung beispielsweise durch Zeitglieder verwirklicht sein (vgl. Fig. 4). In beiden Fällen ist die Steuerschaltung wieder so leistungsarm ausgeführt, daß ihr Eigenverbrauch auch ein Analogsignal auf der Leitung nicht merklich beeinflußt.

An einen solchen Sensorbus können in einfacher Weise alle bekannten Sensoren sowie digitalen Geber zur Abfrage angeschlossen werden und die Steuerlogik zur Bus-Anschaltung läßt sich in einem einfachen integrierten Schaltkreis verwirklichen. Die Installation der einzelnen Sensoren mit zugeordneter Steuerlogik kann mit Hilfe eines besonderen Werkzeugs mit einem einzigen Handgriff realisiert werden.

Die Fig. 10 zeigt ein praktisches Ausführungsbeispiel für einen solchen zu einer einzigen, beispielsweise vergossenen Sensorgruppe zusammengefaßten Teilnehmer: Der Sensorbus 2, 3 ist als Zweileiter-Flachkabel ausgeführt. Der Teilnehmer T weist drei Klemmkontakte $K_1$, $K_2$ und $K_3$ auf. Die Leitungsader 2 des Sensorbus' wird am Installationsort des Teilnehmers, wie dargestellt, aufgetrennt und die Teilnehmer-Baueinheit wird mit einem bekannten Werkzeug in der schematisch dargestellten Weise in das Flachkabel eingeklemmt.

Nach der Installation muß der Zentrale noch die Reihenfolge der Teilnehmer am Peripheriebus 2, 3 bekanntgegeben werden. Die Richtigkeit läßt sich durch Stichproben leicht nachprüfen. Damit kann die Zentrale jederzeit eine Zuordnung eines Meßwerts zu einer bestimmten Meßstelle ausführen. Ein schaltungs- und programmtechnisches Beispiel wie diese Überprüfung und Zuordnung erfolgen kann, wird unter bezug auf die Fig. 11 und 12 erläutert:

Die Fig. 11 zeigt eine Ausgangsschaltung zwischen einer als Mikroprozessorsystem (vgl. Fig. 6) verwirklichten Zentrale und dem Bus 2, 3. Zwischen der an Klemmen 15, 18 anliegenden Versorgungsspannung liegt die Reihenschaltung aus einem Schalttransistor $Tr_1$, einem Widerstand $R_M$ und einem Schalttransistor $Tr_2$. Die Vorspannung an der Basis des Schalttransistors $Tr_1$ wird durch die zwischen den Klemmen 15,18 der Versorgungsspannung liegende Reihenschaltung aus zwei Widerständen 19, 20 und der Kollektor-Emitterstrecke eines weiteren Schalttransistors $Tr_3$ festgelegt, dessen Basis mit einer Steuerausgangsklemme 17 des Mikroprozessors 12 verbunden ist. Das Ausgangssignal des Mikroprozessors 12 an der Klemme 17 gelangt außerdem in Gegenphase (Inverter 21) auf die Basis des Schalttransistors $Tr_2$. Die beiden Anschlüsse des zwischen den als Komplementärpaar verwirklichten Schalttransistoren $Tr_1$, $Tr_2$ liegender Widerstand $R_M$ sind mit dem "+"- bzw. dem "-"-Eingang eines Differenzverstärkers DV verbunden, dessen Ausgang 16 einen Analog/Digital-Umsetzer ADC speist.

Die Schaltung der Fig. 11 arbeitet wie folgt:

Beim Betreten der Abfrageschleife wird der Sensorbus durch ein Impulssignal vom Mikroprozessor an der Klemme 17 eingeschaltet, das heißt der Transistor $Tr_3$ wird durchgeschaltet, so daß der untere Anschluß des Widerstands 20 auf das Potential an der Klemme 18 gelegt und der Transistor $Tr_1$ ebenfalls durchgeschaltet wird. Über den Inverter 21 wird gleichzeitig der Transistor $Tr_2$ gesperrt. Es wird jetzt während eines Zeitintervalls T (vgl. auch Fig. 12) gewartet, bis der Meßwert vom Teilnehmer, also im gewählten Beispiel ein Meßstrom vom Sensor stabil anliegt. Über den Meßwiderstand $R_M$ und den nachgeschalteten Differenzverstärker DV wird der Strom $I_M$ über den A/D-Wandler ADC in einen entsprechenden Digitalwert umgewandelt, dem Mikroprozessor zugeführt und dort gespeichert. Danach wird - zentrale Steuerung vorausgesetzt - die Spannung am Bus 2, 3 für ein kurzes Intervall ($\Delta$ T) ausgeschaltet, wodurch die Umschaltung zum nächsten Teilnehmer erfolgt. Handelt es sich noch nicht um den letzten Teilnehmer am Sensorbus, so wird der eben erläuterte Vorgang wiederholt, was aus dem Flußdiagramm der Fig. 12 ohne weitere Erläuterung ersichtlich ist. Ganz am Ende des Meßvorgangs bleibt der Sensorbus 2, 3 für längere Zeit ohne Spannung (Zeitintervall $T_0$ in Fig. 7), damit beispielsweise alle RC-Glieder 5 (vgl. Fig. 3) in den Teilnehmern wieder in den Ruhezustand gelangen können.

Die Reihenfolge der Teilnehmer am Sensorbus 2, 3 wird der Zentrale 12 etwa durch Programmierung (manuelle Eingabe) mitgeteilt. Störungen am Bus wirken entweder durch kurze Störpulse oder als Folge eines Netzbrumms. In diesem Fall können die Fehler durch Mittelung des Meßsignals über einen längeren Zeitraum weitgehend eliminiert werden.

Neben der Einfachheit der Installation hat das erfindungsgemäße Peripheriebus-System vor allem die folgenden Vorteile:

- Es stellt zahlreiche Diagnosemöglichkeiten zur Verfügung. So kann die Zahl der Teilnehmer bei jedem Meßvorgang überprüft werden. Ein defekter Teilnehmer kann sofort entdeckt und auch identifiziert werden, da die Abfragekette genau an der Stelle des defekten Teilnehmers unterbrochen ist.
- Störungen auf der Übertragungsstrecke können etwa beim Sensorbus durch Steuerung der Abfragezeiten weitgehend ausgeglichen werden.
- Die Funktionen der Einzelteilnehmer sind so einfach, daß sie sich leicht als integrierte Schaltkreise realisieren lassen.

Das erfindungsgemäße Peripheriebussystem läßt sich für folgende exemplarisch dargestellte, jedoch nur beispielsweise zu verstehende Anwendungen einsetzen:

- Haustechnische Aufgaben, insbesondere
    Alarmsysteme,
    Heizkostenerfassung,
    Erfassung anderer haustechnischer Zustandsgrößen;
- Allgemeine Prozeßinstrumentierung;
- Laborautomatisierung;
- Instrumentierung von Umweltschutz-Meßnetzen.

Die Fig. 13 zeigt ein Anwendungsbeispiel für die Erfindung bei der Heizkostenerfassung:

Die Heizkostenerfassung beruht üblicherweise auf der Messung der Temperaturdifferenz zwischen den einzelnen Heizkörpern H und einer anderen Meßstelle V im Raum. In jedem Raum sind also zwei Teilnehmer (Temperatur-Sensoren) angebracht und über den Sensorbus miteinander verbunden. In der Zentrale Z werden alle Temperaturen zyklisch, z.B. einmal pro Minute gemessen. Durch Differenzbildung können die Wärmemengen berechnet und aufaddiert werden. Die jeweilige Summe bildet den raumspezifischen Wärmebedarf.

0035277

- 16 -

## PATENTANSPRÜCHE

1. Übertragungssystem zum Anschließen mehrerer Teilnehmer (Datenquellen oder -senken) an eine Zentrale über eine gemeinsame Verbindungsstrecke (Peripheriebus), d a d u r c h   g e k e n n z e i c h n e t , daß zum sequentiellen adressenlosen Anschluß der Teilnehmer ($T_1$, $T_2$, ... $T_N$) an die Zentrale (1) jedem Teilnehmer ein steuerbares Schalterpaar ($S_1$, $S_2$) zugeordnet ist, dessen eines Schalterelement ($S_2$) in Reihe zu einer durch das Schalterelement auftrennbaren Leitungsader (2) des Peripheriebusses liegt und dessen anderes Schalterelement ($S_1$) in Reihe zum zugeordneten Teilnehmer ($T_1$, $T_2$, ...; 6) angeschlossen ist und im Schließzustand den Anschluß des Teilnehmers an die Zentrale herstellt, und daß jedes Schalterpaar ($S_1$, $S_2$) mit einer Steuerlogik (4, %; 7, 8, 9) ausgerüstet ist, die sicherstellt, daß die beiden Schalterelemente nie gleichzeitig auf Stromdurchgang geschaltet , also nie gleichzeitig geschlossen sind.

0035277

2. Übertragungssystem nach Anspruch 1, d a d u r c h
g e k e n n z e i c h n e t , daß der Peripheriebus als Zweidrahtverbindung verwirklicht ist.

3. Übertragungssystem nach Anspruch 1 oder 2,
d a d u r c h g e k e n n z e i c h n e t , daß
im nicht-aktivierten Zustand der Steuerlogik das in
Reihe zum Teilnehmer ($T_1$, $T_2$, ...; 6) liegende Schalterelement ($S_1$) geschlossen und das im Verlauf der einen
Leitungsader (2) liegende Schaltungselement ($S_2$) geöffnet ist, so daß eine Verbindung von der Zentrale (1)
zur nächsten Datenquelle oder Datensenke am Bus unterbrochen ist.

4. Übertragungssystem nach Anspruch 3, d a d u r c h
g e k e n n z e i c h n e t , daß die zeitrichtige Aktivierung der Steuerlogiken der einzelnen
Schalterpaare von der Zentrale erfolgt.

5. Übertragungssystem nach Anspruch 3 oder 4,
d a d u r c h g e k e n n z e i c h n e t , daß
die einzelnen Steuerlogiken je ein Zeitverzögerungsglied
(4; 8, 9) enthalten, das die Aktivierung der Steuerlogik des ersten Teilnehmers und dessen Anschaltung an
die Zentrale durch ein von der Zentrale abgegebenes
Aktivierungssignal erfolgt, und daß die Steuerlogiken
der übrigen Teilnehmer in der Folge ihrer Reihung am Bus
jeweils mit dem Schließen des in Reihe zum Verlauf der
einen Leitungsader (2) des Bus liegenden Schalterelements

(S$_2$) des dem vorangehenden Teilnehmer zugeordneten Schalterpaars aktivierbar sind.

6. Übertragungssystem nach Anspruch 4 oder 5, d a d u r c h    g e k e n n z e i c h n e t ,   daß die Aktivierung der Steuerlogik des ersten Teilnehmers durch Anschaltung der Versorgungsspannung für die Teilnehmer auf den Peripheriebus von der Zentrale aus erfolgt.

7. Übertragungssystem nach Anspruch 5,   d a d u r c h g e k e n n z e i c h n e t ,       daß das Zeitverzögerungsglied als Zeitglied mit einstellbarer Standzeit bzw. Verzögerungszeit ausgebildet ist.

8. Übertragungssystem nach Anspruch 5 oder 6, d a d u r c h    g e k e n n z e i c h n e t ,   daß dem (ersten) Zeitverzögerungsglied (8) ein zweites Zeitverzögerungsglied (9) nachgeschaltet ist, dessen Ausgang mit dem Steueranschluß des in der einen Leitungsader (2) liegenden Schalterelements (S$_2$) verbunden ist, und daß das in Reihe zum Teilnehmer (6) geschaltete Schalterelement (S$_1$) bei Ablauf der Verzögerungszeit des ersten Zeitverzögerungsglieds (8) durch dessen Ausgangssignal geöffnet wird, so daß während der Verzögerungszeit des zweiten Zeitverzögerungsglieds (9) beide Schalterelemente des betreffenden Schalterpaars geöffnet sind.

9. Übertragungssystem nach einem der vorstehenden Ansprüche, d a d u r c h    g e k e n n z e i c h n e t ,   daß sowohl analoge als auch digitale und digital-codierte Signale über den Peripheriebus übertragbar sind.

10. Übertragungssystem nach einem der vorstehenden An-
    sprüche, d a d u r c h    g e k e n n z e i c h -
    n e t ,    daß die Schalterelemente ($S_1$, $S_2$) durch
    MOS-FETen gebildet sind.

11. Übertragungssystem nach Anspruch 10, d a d u r c h
    g e k e n n z e i c h n e t ,    daß die Schalter-
    elemente ($S_1$, $S_2$) und die Steuerlogik als integrierter
    Halbleiterbaustein verwirklicht sind.

12. Übertragungssystem nach einem der vorstehenden An-
    sprüche, d a d u r c h    g e k e n n z e i c h n e t ,
    daß die Teilnehmer über zwei Adern des Peripheriebusses
    ferngespeist sind, wobei die Stromversorgung für alle
    Teilnehmer durch gleichstromdurchlässige Drosselelemente
    (13) an den einzelnen in Reihe zur einen Leitungsader (2)
    liegenden Schalterelementen gewährleistet ist.

0035277

1/5

# FIG.1

$A_I$ $D_I$   $A_I$ $D_I$   $A_I$ $D_I$

1

2

Zentrale

3

$T_1$   $T_2$   $T_N$

$A_0$ $D_0$   $A_0$ $D_0$   $A_0$ $D_0$

$T_i$ : Teilnehmer i

$1 \leq i \leq N$

# FIG. 2

S/E : Sende / Empfangs – Schaltung

$S_2$   $S_2$   $S_2$

$S_1$   $S_1$   $S_1$

S/E   S/E   S/E

Fig.2a   Fig.2b   Fig.2c

# FIG. 3

2   VMOS/FET

$S_2$

$S_1$

VMOS/FET   CMOS-Flip-Flop

$U_E$   $U_A$

I

6   4

5

3

## FIG. 4

$U_E$   $U_A$

VMOS $S_2$

$S_1$
VMOS 7

$I_{Mess}$ 6

Delay 1  8    Delay 2  9

2

3

## FIG. 5

A —[ R ]—•——▷—— B
        C 10

## FIG. 6

A ‾‾|__|‾‾

B ___|‾‾|___

⟵ Verzögerung ⟶

Zentrale

Mikroprozessor-System  12

Stom-Auswertung  13

Spannungs-steuerung  14

$U_A$ 15   $S_3$   1

2

3

# FIG. 7

Zentrale
Selektion

$S_1^1$

$S_2^1$

$T_1$ aktiv

$S_1^2$

$S_2^2$

$T_2$ aktiv

$S_n^1$

$S_n^2$

$T_n$ aktiv

Selekt $T_i$ an BUS

$t_1$   $T_1$   $t_1'$ $t_2$   $T_2$   $t_2'$ $t_3$     $t_N$   $T_N$   $t_N'$

TO

Zeit →

Ruhezustand für alle Teilnehmer

# FIG. 8

S/E/Z : Sender / Empfänger / Zeitsteuerung

Prof. Dr. G. Färber

# FIG. 9

S/E/Z : Sender/Empfänger/Zeitsteuerung

# FIG. 10

Auftrennen

# FIG. 11

zu ADC

von µP

zum Sensorbus

FIG. 12

Start

BUS "ein"

Warte T

Wandle ADC

BUS "aus"

Warte ΔT

Zähle Teilnehm.

letzter?

nein

ja

Ende

FIG. 13

Zimmer

H

Zimmer

H

Zimmer

H

V   V

V

Diele

Zentrale

Z

V

V

Küche

H

Bad

H

## EINSCHLÄGIGE DOKUMENTE

| Kategorie | Kennzeichnung des Dokuments mit Angabe. soweit erforderlich. der maßgeblichen Teile | betrifft Anspruch |
|---|---|---|
| | IBM TECHNICAL DISCLOSURE BULLETIN, Band 9, Nr. 10, März 1967, Seite 1293 New York, U.S.A. M.M. ASTRAHAN et al.: "Pulse initiated polling system" <br><br> * Insgesamt * | 1-4 |
| | FR - A - 2 214 385 (SOCIETE HONEY-WELL BULL) <br><br> * Seite 2, Zeile 34 - Seite 3, Zeile 40; Figur 1 * | 1,3,5, 6 |
| | DE - B - 1 197 513 (INTERNATIONAL BUSINESS MACHINES CORPORATION) <br><br> * Spalte 4, Zeile 57 - Spalte 5, Zeile 68; Figur 1 * | 1 |

**KLASSIFIKATION DER ANMELDUNG (Int. Cl.)**

H 04 Q 9/00
H C4 L 11/16

**RECHERCHIERTE SACHGEBIETE (Int Cl.)**

H 04 Q 9/00
H 04 L 11/16
G 06 F 3/04

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie. übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-06-1981 | WANZEELE |

EPA form 1503.1 06.78